# EUROPÄISCHE PATENTSCHRIFT

(11) **EP 2 472 151 B1**
(45) Veröffentlichungstag und Bekanntmachung des Hinweises auf die Patenterteilung: **06.11.2013**
(21) Anmeldenummer: 11006011.8
(22) Anmeldetag: 22.07.2011
(51) Int. Cl.: F16K 24/04, F16K 24/06

(54) **Be-/Entlüftungsautomat mit Elastomer-Membran 2**
Ventilation device with elastomer membrane 2
Automate d'alimentation et d'évacuation avec membrane élastomère 2

(30) Priorität: 03.01.2011 DE 202011001194 U
(43) Veröffentlichungstag der Anmeldung: 04.07.2012
(73) Patentinhaber: Wilhelm Schauerte GmbH & Co. KG Geschäftsführung, 57350 Lennestadt-Grevenbrück (DE)
(72) Erfinder: Schauerte, Stefan W., 57350 Lennestadt-Grevenbrück (DE); Hidde, Axel R., 57076 Siegen (DE); Klose, Odo, 42285 Wuppertal (DE)

(56) Entgegenhaltungen:
- DE-A1-102006 021 454
- DE-U1-202009 013 793
- US-A1- 2010 032 028

## Beschreibung

Die Erfindung betrifft einen Be-/Entlüftungsautomat mit einer Elastomer-Membran - insbesondere ein automatisches Be-/Entlüftungsventil für Heizungs- und Warmwasseranlagen oder geschlossene Rohrkreisläufe unter besonderer Berücksichtigung des hydraulischen Abgleichs.

Entlüftungsventile finden überall dort Anwendung, wo Medien in geschlossenen Anlagen und Systemen, Behältern, Kesseln, Speichern oder Rohrleitungen der Thermik unterliegen und Druckausgleich stattfinden muß. Bekannte Anwendungen sind Druckluftanlagen, wasserführende Anlagen, Kraftstoffsysteme und -behälter, geschlossene Systeme in der Verkehrstechnik. Häufig sind Be-Entlüftungsventile für flüssige Stoffe als Schwimmerventile mit Verschlußmechanismus ausgeprägt.

Entlüftungsventile wurden z.B. in DE 202009013793, DE 102006021454 oder US 2010/0032028 schon offenbart.

In der mehr spezifischen Anwendung der Heizungs- und Warmwasseranlage übernehmen die Be-Entlüftungsventile im wesentlichen drei Funktionen/Betriebsarten
- Helfen beim Befüll- und Entleerungsvorgang, Betriebszustand ca. 3 bar
- Sicherstellen der Automatikentlüftung, Betriebszustand ca. 3 bar
- Standhalten der Druckprüfung, Betriebszustand bis ca. 10 bar.

Die Membrantechnik ist noch eine junge Technologie, unterliegt aber wegen nahezu unbegrenzter Einsatzmöglichkeiten einer permanenten Erneuerung. Der Einsatz von Membranen findet statt in unterschiedlichsten Disziplinen der Technik, wie Medizin/ Dialyse, Getränkeindustrie/Filterung und Alkoholentzug, Brauchwasser/Reinigung und Filtration, Verkehrs-, Fahrzeugtechnik/Hohlraumentlüftung, etc. Membranen werden als semipermeable Folien hergestellt und ihr Einsatzzweck wird durch verschiedene Produktparameter bestimmt; sie halten hohen Flüssigkeitsdrücken stand, sind aber durchlässig für gasförmige Medien. Der Membranwerkstoff ist aus Kunststoff, wie z.B. Polyethylen, Polypropylen (PP) oder Polystyrol (PS), Polytetrafluorethylen (PTFE) oder Polyurethan (PUR), oder aus elastomerem Kunststoff, wie Acrylnitril (A/PE) oder Kautschuk (EVA, IIR, NR, SI, ... ), ist hydrophob/hydrophil und/oder oleophob/oleophil, in weiten Bereichen chemisch kompatibel, sterilisationsgeeignet, nicht benetzbar bei kleinsten Oberflächenspannungen.

Der hydraulische Abgleich - nach DIN EN 12 831 (Jun. 2003) und gefordert in der VOB/C DIN 18 380 - beschreibt ein Verfahren, mit dem innerhalb einer Heizungsanlage jeder Heizkörper oder Heizkreis einer Flächenheizung bei einer festgelegten Vorlauftemperatur der Heizungsanlage genau mit der Wärmemenge versorgt wird, die benötigt wird, um die für die einzelnen Räume gewünschte Raumtemperatur zu erzielen. Dies wird üblicherweise bei Planung, Montage und Inbetriebnahme der Anlage erreicht; auch ein nachträglicher hydraulischer Abgleich ist mittels im Rohrnetz vorhandener Armaturen gegeben, wie voreinstellbare Thermostatventile. Ziele des hydraulischen Abgleichs sind
- Definierte Massenströme an jedem Heizkörper im Auslegungsfall
- Gleichmäßige Massenstromverteilung in Aufheizphasen
- Gute Regeleigenschaften des Thermostatventils.

Um die Durchflußmenge für jeden Heizkörper voreinzustellen, werden entweder Thermostatventile mit Durchflußkennwert durch angepaßten kV-Kegel eingesetzt oder die Durchflußwiderstände mittels der Rücklaufverschraubungen eingestellt. Da in jedem Fall eine entlüftete Heizungs- oder Warmwasseranlage Grundvoraussetzung für den Abgleich ist, ist der Einsatz eines Entlüftungsautomaten am Heizkörper oder Warmwassergerät naheliegend, der außerdem meßtechnische Voraussetzungen für die Durchführbarkeit des hydraulischen Abgleichs schafft.

Um die Voraussetzung einer dauerhaft entlüfteten Heizungs- oder Warmwasseranlage zu schaffen, wird die Anlage durch eine flüssigkeitsdichte atmungsaktive semipermeable Membran oder Elastomer-Membran gegenüber der Atmosphäre 'bedingt geöffnet'.

In der Folge wird also vorgeschlagen, die Heizungs- und Warmwasseranlage für die Gas- und Wasserdampfdurchlässigkeit zu öffnen, in dem semipermeable - flüssigkeitssperrende und gas- und dampfdurchlässige - Membranen oder Elastomer-Membranen in selbständigen Druckausgleichselementen (DAE) oder in Verbindung mit Schlauch- oder Rohreinführungen oder -auslässen für den Druckausgleich (DA) und somit für eine entlüftete Anlage sorgen. Je nach Anwendungsfall kommen für die Be-/Entlüftung unterschiedliche Kunststoff-Membranwerkstoffe zum Einsatz - wie Polyethylen (PE), Polypropylen (PP), Polystyrol (PS), Polytetrafluorethylen (PTFE) oder Polyurethan (PUR) oder wie Acrylnitril (A/PE), Kautschuk (EVA, IIR, NR, SI, ... ) - wobei vornehmlich eine Abhängigkeit zur Medienverträglichkeit besteht, wie hydrophobe/-phile oder oleophobe/-phile Charakteristika des Membranwerkstoffs.

Die Elastomer-Membran der erfinderischen Neuheit besteht vorzugsweise aus einem Kautschukwerkstoff - wie z.B. Silikon-Kautschuk - mit guten Gas- und Wasserdampf-Durchgangszahlen, welche im 2K oder 3K (Komponenten)-Spritzverfahren direkt mit einem Entlüftungsorgan zu einem Be-/Entlüftungsventil verarbeitet wird. Auf Grund einer geforderten Formgebung der Elastomer-Membran und der Shore-Härte des Materials kommt es zum Einsatz eines z.B. fingerartigen/sternförmigen oder ringförmigen Trägers, der als Bestand- oder Einlegeteil mit dem Kautschukwerkstoff umspritzt wird.

Alle Kunststoff-Werkstoffe sind für Gase, Dämpfe oder Flüssigkeiten viel oder wenig durchlässig; die Durchlässigkeit wird auch als Permeation oder Permeabilität bezeichnet, die Rohlösung oder das Feed wird der Membran zugeführt, durch die Membran gelangt das Konzentrat oder das Permeat, die differente Restmenge von Rohlösung und Konzentrat ist das Retentat. Wichtig sind besonders die Durchlässigkeit für Wasserdampf, Gase und Dämpfe für Flüssigkeiten. Hohe oder niedrige Durchlässigkeiten von Kunststoff-Folien/-Membranen für bestimmte Stoffe können dabei je nach Anwendungsgebiet gefordert oder unerwünscht sein.

Gemäß der vorliegenden erfinderischen Neuheit soll dem Wasser Luft - im wesentlichen bestehend aus ca. 78% Stickstoff (N₂), ca. 21 % Sauerstoff (O₂) und ca. 0,04% Kohlendioxid (CO₂) und Wasserdampf, gemessen in relativer Feuchte - entzogen werden; die Relation des Durchgangs bei Kunststoffen für N₂ : O₂ : CO₂ ist etwa 1 : 4 : 16. Ein anderes Beispiel betrifft die Durchlässigkeit von Wasserdampf zur Verhinderung von Kondensatbildung in Gehäusen steuer- und regeltechnischer Anlagen. Bei fast allen Kunststoff-Folien - mit Ausnahme von Cellulosehydrat (CH), Handelsname Cellophan oder Zellglas - verringert sich die Durchlässigkeit mit der Dicke. Die Membran-Durchlässigkeit von Gas wird gemäß der Prüfnorm DIN 53 380 in der Einheit [cm³ / m² x d x bar] und die von Wasserdampf gemäß Prüfnorm DIN 53 122 in der Einheit [g / m² x d] gemessen. Größenordnungen sind für Kautschuk, 50 Shore Härte, 20°C Temperatur
- für die Gasdurchlässigkeit ca. 600 cm³ x mm / ( m² x h x bar ); d.h. Menge Luft, gemessen in cm³, die pro Stunde bei einer Druckdifferenz von 1 bar eine Membran von 1 m² Fläche und 1 mm Dicke durchdringt
- für die Wasserdampfdurchlässigkeit ca. 40 g x mm / ( m² x d ); d.h. Masse Wasserdampf in g, die in 24 Stunden eine Membran von 1 m² Fläche und 1 mm Dicke durchdringt.

Hydrophobe Kunststoffe nehmen keinen Wasserdampf auf, somit besteht auch kein Einfluß auf die Gaspermeation; hydrophile Kunststoffe können beträchtliche Mengen an Wasserdampf absorbieren, wodurch sich eine Vergrößerung des Gasdurchgangs einstellt.

Bei gleichem Gesamtdruck inner- und außerhalb zweier membrangetrennter Räume lassen sich drei Gasdurchgangsmechanismen durch Kunststoffe beschreiben, wie
1. Durchgang durch porenfreie Kunststoffschichten infolge Lösungsdiffusion bei
   a) und
   b) außerhalb der Poren im die Poren umschließenden Kunststoff
      (Permeation, Normalfall)
2. Durchgang durch größere Poren und Fehlstellen infolge Fick'scher Diffusion
   a) wobei die Poren die gesamte Membrandicke durchdringen, wie offenporiger Schaum oder Perforierungen oder poröse Membranen
   b) wobei die Poren sich innerhalb der Membran befinden, wie geschlossenporiger Schaum oder poröse Membranen
      (Durchmesser der Poren > freie Weglänge der Gasmoleküle)
3. Durchgang durch Mikroporen infolge Knudsen-Diffusion
   a) wie bei mikroporösen Membranen
   b) in den eingeschlossenen Poren wie bei mikroporösen Membranen
      (Porendurchmesser < freie Weglänge der Gasmoleküle)

Bei Gesamtdruckunterschied zwischen den Räumen stellt sich ein
zu 1. die Lösungsdiffusion
zu 2. eine Poiseuille-Strömung an die Stelle der Fick'schen Diffusion; führt in relativ kurzer Zeit (Sekunden bis Tage) zu Druckausgleich (DA)
zu 3. die Knudsen-Diffusion.

Die Gasdiffusion beim Gasdurchgang durch Mikroporen ist nicht temperaturabhängig.

Die Durchgangsmechanismen für Wasserdampf entsprechen denen des Gasdurchgangs. Bei sehr hohen Wassergehalten kann in den Poren wegen der Kapillarkondensation zusätzlich ein Kapillarwasserzug als Transportmechanismus auftreten. Bei der Lösungsdiffusion beim Durchgang von Gasen steigt der Gasdurchgang linear mit dem Partialdruckunterschied des durchgehenden Gases an, was aufgrund der häufig nichtlinear mit dem Partialdruck des Wasserdampfs ansteigenden Sorption von Elastomer-Membranen beim Wasserdampf nicht gilt; eine lineare Umrechnung beim treibenden Gefälle des Wasserdampf-Partialdrucks - oder der relativen Feuchte - ist nicht zulässig.

Neben einer recht groben mechanischen Perforation birgt die Lasertechnologie die Möglichkeit, eine dem jeweiligen Anwendungszweck gezielt angepaßte Mikroperforation einer Folie oder einer Membran zu verleihen. Dabei wird die Lochgröße und die Anzahl der Löcher so dimensioniert, daß Luftzirkulation möglich ist, Feuchtigkeit jedoch zurückgehalten wird. Weitere Verfahren sind die Nadeltechnologie und das Flammperforieren. Dabei zeichnet sich der Laser durch kleinere Löcher aus, die durch einen Mikroschmelzrand einreißgesichert sind. Außerdem arbeitet der Laser berührungslos und prozeßsicher bei hohen Bahngeschwindigkeiten, entgegen der Bruchgefahr bei Nadeln.

Eine Änderung der Relation des Gasdurchgangs ist nur durch Einbringen von Poren in die Folien/Membranen möglich und um die Durchgängigkeit gezielt beeinflussen zu können, sowohl hinsichtlich des Volumens als auch im Verhältnis der Gase untereinander. Die Durchlässigkeit setzt sich aus der Lösungsdiffusion der Folie/Membran und der Fick'schen oder Knudsen-Diffusion der Mikroporen zusammen und der Gesamtdurchgang und die Relation der Durchgänge werden durch gezielte Auswahl beider Einflüsse bestimmt. Eine Mikroperforation läßt sich durch Einmischen von feinsten mineralischen Füllstoffen mit molekularen Diffusionskanälen im Partikel oder an der Kontaktstelle Partikel/Kunststoff erzielen, die sich auch durch Recken der Folie beeinflussen läßt (Verpackung/Gehäuse mit kontrollierter Atmosphäre - Controlled Atmosphere Package [CAP] / Housing [CAH]).

Auf die Würdigung des Stands der Technik wird an dieser Stelle verzichtet und auf die ausführliche Darstellung in der Hauptanmeldung verwiesen.

Gemäß Hautpatent 'Be-/Entlüftungsautomat mit Elastomer-Membran', Patentanmeldung Nr. DE 10 2010 051 890, wird ein solcher atmungsaktiver automatischer Be-/ Entlüftungsautomat für Heizungs- und Warmwasseranlagen oder geschlossenen Rohrkreisläufen - unter besonderer Berücksichtigung des hydraulischen Abgleichs gewürdigt.

Der Be-/Entlüftungsautomat mit Elastomer-Membran besteht aus einer Deckelkappe, einem Oberteil, einer Membran sowie einem Unterteil. Die Kunststoffteile Deckelkappe und Oberteil sind zweiteilig gespritzt, werden aber durch Fügen und Schweißen, Pressen und/oder Kleben einstückig. Ober- und Unterteil werden miteinander über die zwischengefügte Membran als Einlegeteil oder besser mit im Oberteil im 2K (Komponenten)-Verfahren angespritzte Membran als Dichtteil verschraubt. Das vorzugsweise Kunststoff-Unterteil besitzt darüberhinaus ein Kugelventil, welches mittels einer Kugel und einer Schraubenfeder gegen eine Zentralbohrung im Unterteil dichtet, beeinflußt jedoch durch einen Stößel des Oberteils, der je nach Schraubtiefe zwischen Ober- und Unterteil einen Gas- und Flüssigkeitskanal freigibt. Das Unterteil besitzt - ähnlich einer Doppelmuffe - ein weiteres Außengewinde, welches, mit einem Dichtring versehen, die Verbindung zur Heizungs- oder Warmwasseranlage oder geschlossenen Rohrkreisläufen bildet.

Beim Hauptpatent wird angenommen, daß der Be-/Entlüftungsautomat, bestehend aus Deckelklappe, Oberteil, halbdurchlässiger Membran, Unterteil und Kugelventil, einen Flüssigkeits- und Gaskanal besitzt, der durch den mit dem Gasdurchtrittskörper verbundenen Membrankörper zum Gaskanal semipermeabel reduziert. Mit dem Gasdurchtrittskörper - und somit auch mit der semipermeablen Membran - wurde eine Form - ähnlich einer Zitronenpresse - gewählt, die einerseits eine große Durchtrittsfläche für den Gaskanal bietet und andererseits auch - im Verbund von Ober- und Unterteil - in der Lage ist, eine dünne, permeationsabhängige Membranschicht aufzunehmen und diese auch gegen höheren Druck zu isolieren. Die gestalterischen Vorteile bezogen auf den Gaskanal und die Permeationsrate könnten sich nachteilig auf die kunststoffspritztechnische Realisation und den damit verbundenen Werkzeugaufwand auswirken.

Der Erfindung liegt daher die Aufgabe zu Grunde, eine Einrichtung nach dem Oberbegriff des Anspruchs 1, einen Be-/Entlüftungsautomaten mit einer Elastomer-Membran 2 - insbesondere ein automatisches Be-/Entlüftungsventil für Heizungs- und Warmwasseranlagen oder geschlossene Rohrkreisläufe unter besonderer Berücksichtigung des hydraulischen Abgleichs unter Umgehung obigen Nachteils zu schaffen.

Diese Aufgabe wird erfindungsgemäß durch die kennzeichnenden Merkmale des Anspruchs 1 gelöst; auf vorteilhafte Ausgestaltungen nehmen die Unteransprüche Bezug. Ziel ist der Aufbau eines Be-/Entlüftungsautomaten mit einer Elastomer-Membran bei der die Führung des Flüssigkeits- und Gaskanals so gestaltet ist, daß die semipermeable Elastomer-Membran im 2K (Komponenten)-Kunststoff-Spritzverfahren im laufenden Produktionsprozeß eingebracht wird.

Der Be-/Entlüftungsautomat mit Elastomer-Membran besteht aus einem Deckel (nicht dargestellt), einem Oberteil, einer Membran, einem Unterteil sowie einem Kugelventil. Die Kunststoffteile Deckel und Oberteil sind zweiteilig gespritzt, werden aber durch Fügen und Schweißen, Pressen und/oder Kleben einstückig. Ober- und Unterteil werden miteinander über die im Oberteil im 2K (Komponenten)-Verfahren angespritzte Membran als Dichtteil verschraubt. Das vorzugsweise Kunststoff-Unterteil besitzt darüberhinaus ein Kugelventil, welches mittels einer Kugel und einer Schraubenfeder (nicht dargestellt) gegen eine Bohrung 2 im Unterteil dichtet, beeinflußt jedoch durch einen Stößel des Oberteils, der je nach Schraubtiefe zwischen Ober- und Unterteil einen Flüssigkeits-/Gaskanal freigibt. Das Unterteil besitzt - ähnlich einer Doppelmuffe - ein weiteres Außengewinde 2, welches, mit einem Dichtring (nicht dargestellt) versehen, die Verbindung zur Heizungs- oder Warmwasseranlage oder geschlossenen Rohrkreisläufen bildet. Nach Vorstellung der Einzelkomponenten folgt eine Beschreibung der Funktionsweise des Be-/Entlüftungsautomaten nach Zusammenbau.

Die mit der Erfindung erzielbaren Vorteile bestehen insbesondere darin, daß der Deckel bzw. die Deckelkappe mindestens zwei Funktionen inne hat; sie bildet einerseits durch ihre glatte Oberfläche einen ästhetischen Abschluß und ein beruhigendes Erscheinungsbild des Be-/Entlüftungsautomaten nach außen. Der sich ergebende kreisförmige Schlitz zwischen dem Rand der Deckelkappe, dem Rand des Membrankörpers und der Einfassung des Oberteils bildet einen Teil des Gaskanals.

Eine weitere Ausprägungsform der erfinderischen Neuheit ist dadurch gegeben, daß das hohlzylinderförmige Oberteil am Außenzylinder Griffmulden besitzt, um die Verschraubung des Innengewindes mit dem Außengewinde 1 des Unterteils zu erleichtern, da über diese Verschraubung auch die Flüssigkeitsdichtigkeit hergestellt wird. Zwischen Ober- und Unterteil ist im Innern des Oberteils die Membran als 2K-Spritzteil Bestandteil des Oberteils. Das Oberteil hat einen kreisförmige Einfassung, die zum Deckel hin, von einem Ringspalt als Gaskanal abgelöst wird.

Der Gaskanal wird weiterhin durch einen Gasdurchtrittskörper gebildet, besitzt eine Anzahl von im 60°-Winkel beabstandeten, räumlich diagonal zum Unterteil zentral gerichteten Stützrippen, die in ihrem Zentrum einen axial gerichteten Befestigungsdom aufnehmen, dessen zum Unterteil gerichtetes Ende in einen als Betätigungselement dienenden Stößel für das federnd gelagerte Kugelventil übergeht. Weiterhin werden Stützrippen und Befestigungsdom für die Membranfunktion elastomerumspritzt, wobei die Summe der Stützrippen eine kegelstumpfartig geformte Fläche aufspannt. Hintergrund dieser etwas ungewöhnlich erscheinenden, durch sechs offene Stützrippen/Durchbrüche gebildete Flächengestaltung ist die Drücke der verschiedenen Betriebszustände aufnehmen zu können, auch in Verbindung mit der eingespritzten vergleichsweise dünnen Membran bezogen auf die aufgespannte Fläche und die aufzunehmenden Drücke.

Eine weitere Ausgestaltung der Erfindung sieht vor, daß die relativ dünne, gespritzte Elastomer-Membran - eine Zunahme der Materialstärke steht im reziproken Verhältnis zur Durchgangszahl - aus einem etwa kegelstumpfförmigen, stützrippenumspritzten Materialkörper besteht - mit einer Innenfläche, die auch den Befestigungsdom umfaßt - dessen kreisförmiger Außenrand durch eine Materialwulst abgeschlossen ist und mit dem Deckel einen Ringspalt für den Gaskanal bildet, und eine hohlzylinderförmige Außenfläche aufweist, die durch Umspritzen eines ringförmigen Ansatzes des Oberteils gebildet ist und als Dichtzylinder gegen den zylinderförmigen Ansatz 1 des Unterteils dichtet. Die Elastomer-Membran ist ein im 2K-Verfahren mit dem Oberteil hergestelltes einstückiges Teil und wirkt an den Stellen der Innenfläche, die keine Umspritzung einer Stützrippe sind.

Gemäß einer weiteren vorteilhaften Ausgestaltung der Erfindung ist das hohlzylinderförmige Unterteil vorzugsweise aus Kunststoff gefertigt und ähnelt einem Doppelnippel mit zwei Außengewinden, wobei ein Außengewinde 1 das Oberteil aufnimmt und das zweite Außengewinde 2 die Verbindung des Be-/Entlüftungsautomaten zur wasserführenden Anlage herstellt. Im Bereich des Außengewindes 2 weist das Unterteil einen rohrförmigen Ansatz auf, der den Flüssigkeits-/Gaskanal bildet und die Ventileinrichtung mit Ventilkugel und -feder aufnimmt, wobei die Ventilkugel in axialer Richtung vom zylinderförmigen Stößel des Oberteils positioniert wird und gegen den Federdruck den Ventilsitz freigibt oder zusperrt. Den Abschluß zum Oberteil bildet ein topfförmig ausgeprägtes Volumen, wobei dessen kreisförmige Grundfläche in seinem Zentrum den kugelventilgesteuerten Kanal mit Bohrung 1 aufweist und zum Außenrand hin eine radiale Begrenzungsfläche, Ansatz 1, besitzt, die mit dem Dichtzylinder des Membrankörpers im Bereich des Ansatzes des Oberteils zwischen Ober- und Unterteil dichtet.

Die Funktionsweise des Be-/Entlüftungsautomaten kann wie folgt beschrieben werden; es gibt im wesentlichen zwei Betriebszustände und einen Übergangszustand sowie einen Sonderfall.

Bei lose verschraubtem Ober- und Unterteil wirkt der Stößel des Oberteils nicht axial auf das Kugelventil und die Kugel schließt die Zentralbohrung des rohrförmigen Ansatzes des Unterteils dicht ab, da die Feder auf die Kugel in axialer Richtung wirkt. Gibt es einen Innendruck in der Anlage, der dem Außendruck - meist atmosphärischer Druck - überwiegt, wirkt dieser zusätzlich dichtend auf die Kugeloberfläche. Der kegelstumpfförmige Zwischenraum zwischen Ober- und Unterteil - auch Flüssigkeits-/Gaskanal bezeichnet - bleibt drucklos und/oder auch leer
- Betriebszustand 1.

Wird jetzt das Oberteil gegen das Unterteil allmählich verschraubt, schiebt sich der hohlzylinderförmige Ansatz des Oberteils mit überspritztem Elastomer des Membrankörpers dichtend in den hohlzylinderförmigen Ansatz 1 des Unterteils, bei noch geschlossenem, dichtenden Kugelventil
- Übergangszustand.

Wird das Oberteil gegen das Unterteil weiter handfest verschraubt, wirkt einerseits die Dichtfunktion des Dichtzylinders des Membrankörpers absolut und andererseits der Stößel des Oberteils in axialer Richtung gegen den Federdruck und ggf. gegen den Innendruck öffnend auf das Kugelventil; der kegelstumpfförmige Zwischenraum zwischen Ober- und Unterteil - auch als Flüssigkeits-/Gaskanal bezeichnet - füllt sich druckbehaftet
- Betriebszustand 2.

Dies ist der 'normale' Betriebszustand, der Innendruck drückt das Flüssigkeits-/Gasgemisch mit Betriebsdruck gegen den semipermeablen Membrankörper: Flüssigkeiten werden zurückgehalten, Gase können durch die semipermeable Membran über den als Ringspalt ausgebildeten Gaskanal zwischen den Stützrippen des Oberteils und dem kreisförmigen Deckel entweichen. Die relativ dünnwandige semipermeable Membran wird von den mit umspritzten Stützrippen gehalten und beult - je nach Innendruck - im Bereich der sich zwischen den Stützrippen ergebenden Durchbrüche aus.

Einen Sonderfall stellt die Anlage und das wasserführende System unter dem wesentlich höheren Prüfdruck dar
- Betriebszustand 3.

Bei diesem Betriebszustand wird entweder zuvor das Oberteil von dem Unterteil durch Aufschrauben gelöst, so daß das Kugelventil dicht schließt und der Be-/Entlüftungsautomat diesem Druck standhält oder es bleibt beim Betriebszustand 2 und sowohl die Stützrippen des Oberteils und die sich durchbiegende Membran nehmen den höheren Druck vorübergehend auf; die Prüfungen mit Prüfdruck sind zeitlich begrenzt.

Der Gegenstand der Erfindung wird nachfolgend anhand der als Anlage beigefügten Zeichnungen von Ausführungsbeispielen weiter verdeutlicht. Es zeigen
- **Fig. 1**: Be-/Entlüftungsautomat, in Perspektive
**a)** Ansicht Vorderseite/Seite, ohne Deckelkappe
**b)** Ansicht Rückseite/Seite
- **Fig. 2**: Be-/Entlüftungsautomat, halbgeschnitten, in Perspektive, ohne Deckel
- **Fig. 3**: Be-/Entlüftungsautomat, ohne Deckel
**a)** Halbschnitt, winkelversetzt
**b)** Halbschnitt, Seitenansicht
**c)** Oberteil, Draufsicht
- **Fig. 4**: Elastomer-Membran, Ventil
**a)** Halbschnitt, winkelversetzt
**b)** Draufsicht

Gleiche und gleichwirkende Bestandteile der Ausführungsbeispiele sind in den Figuren jeweils mit denselben Bezugszeichen versehen.

Die Beschreibung der erfindungsgemäßen Einrichtung wird fortgesetzt anhand der Erläuterung der Figuren.

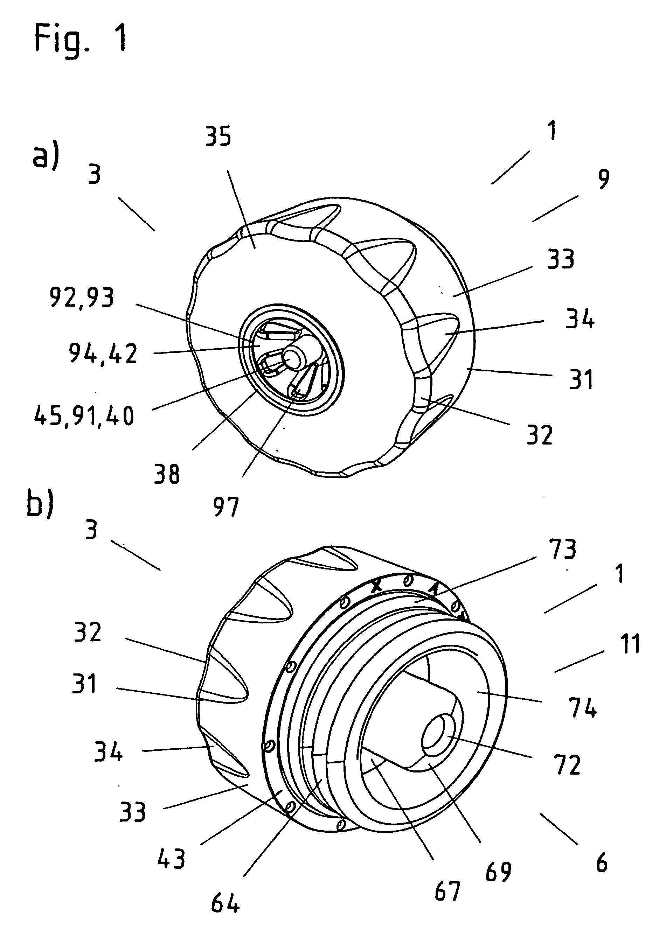

Wie aus **Fig. 1** ersichtlich, besteht der Be-/Entlüftungsautomat **1** mit Elastomer-Membran 2 aus einem Deckel **2** (nicht dargestellt), einem Oberteil **3 ,** einer semipermeablen Membran **9 ,** einem Unterteil **6** sowie einem Kugelventil 11. Die Kunststoffteile Deckel und Oberteil sind zweiteilig gespritzt, werden aber durch Fügen und Schweißen, Pressen und/oder Kleben einstückig. Ober- und Unterteil werden miteinander über die im Oberteil im 2K (Komponenten)-Verfahren angespritzte Membran als Dichtteil verschraubt.

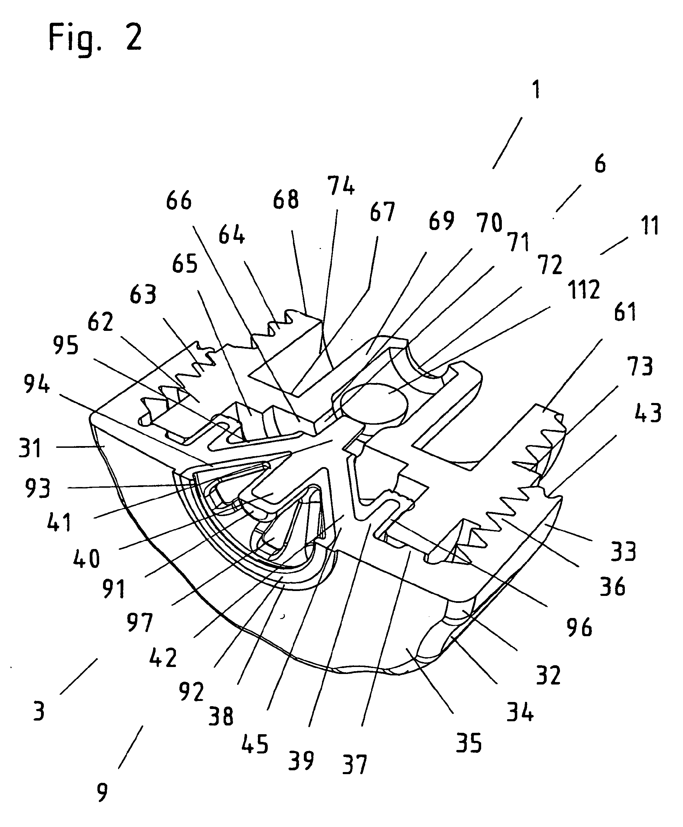

Gemäß **Fig. 2** besitzt das vorzugsweise Kunststoff-Unterteil darüberhinaus ein Kugelventil, welches mittels einer Kugel **112** und einer Schraubenfeder **111** (nicht dargestellt) gegen eine Bohrung 2 **72** im Unterteil dichtet, beeinflußt jedoch durch einen Stößel **41** des Oberteils, der je nach Schraubtiefe zwischen Ober- und Unterteil einen Flüssigkeits-/Gaskanal freigibt. Das Unterteil besitzt - ähnlich einer Doppelmuffe - ein weiteres Außengewinde 2 **64 ,** welches, mit einem Dichtring **75** (nicht dargestellt) am Rand 2 **73** versehen, die Verbindung zur Heizungs- oder Warmwasseranlage oder geschlossenen Rohrkreisläufen bildet. Nach Vorstellung der Einzelkomponenten folgt eine Beschreibung der Funktionsweise des Be-/Entlüftungsautomaten nach Zusammenbau.

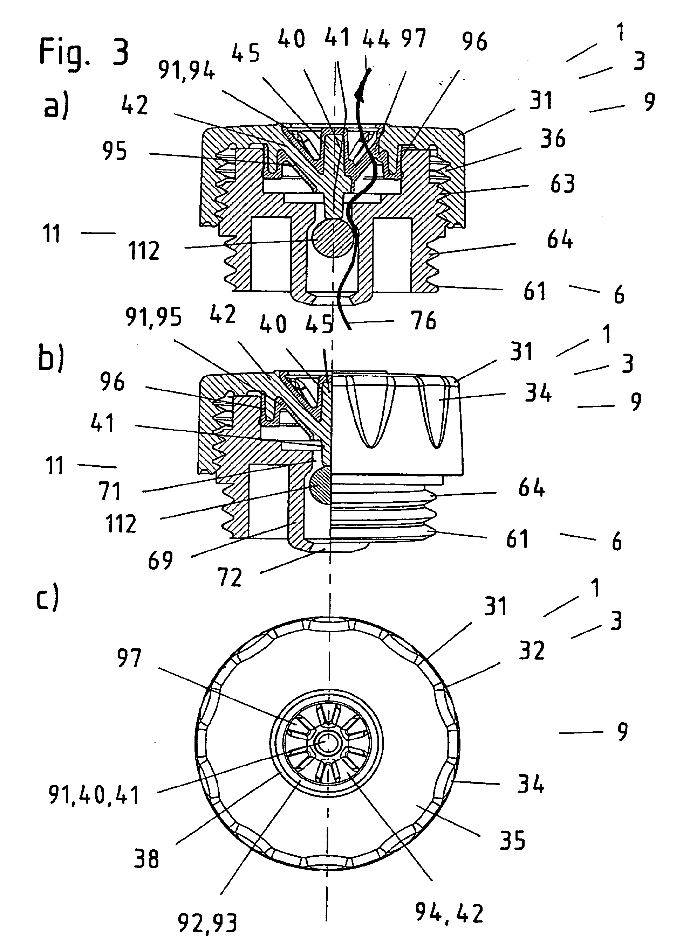

Der Deckel **2** bzw. die Deckelkappe **21** hat mindestens zwei Funktionen inne; er/ sie bildet einerseits durch seine/ihre glatte Oberfläche einen ästhetischen Abschluß und ein beruhigendes Erscheinungsbild des Be-/Entlüftungsautomaten **1** nach außen. Der sich ergebende kreisförmige Schlitz zwischen dem Rand der Deckelkappe, dem Rand **93** des Membrankörpers **91** und der Einfassung **38** des Oberteils **3** bildet einen Teil des Gaskanals **44 ,** gemäß **Fig. 3****.**

Das hohlzylinderförmige Oberteil **3** besitzt am Außenzylinder **33** Griffmulden **34 ,** um die Verschraubung des Innengewindes **36** mit dem Außengewinde 1 **63** des Unterteils **6** zu erleichtern, da über diese Verschraubung auch die Flüssigkeitsdichtigkeit hergestellt wird. Zwischen Ober- und Unterteil ist im Innern des Oberteils die semipermeable Membran **9** als 2K-Spritzteil Bestandteil des Oberteils. Das Oberteil hat einen kreisförmige Einfassung **38 ,** die zum Deckel **2** hin, von einem Ringspalt als Gaskanal abgelöst wird.

Der Gaskanal **44** wird weiterhin durch einen Gasdurchtrittskörper **45** gebildet, besitzt eine Anzahl von im 60°-Winkel beabstandeten, räumlich diagonal zum Unterteil **6** zentral gerichteten Stützrippen **42 ,** die in ihrem Zentrum einen axial gerichteten Befestigungsdom **40** aufnehmen, dessen zum Unterteil gerichtetes Ende in einen als Betätigungselement dienenden Stößel **41** für das federnd gelagerte Kugelventil **11** übergeht. Weiterhin werden Stützrippen und Befestigungsdom für die Membranfunktion elastomerumspritzt, wobei die Summe der Stützrippen eine kegelstumpfartig geformte Fläche aufspannt. Hintergrund dieser etwas ungewöhnlich erscheinenden, durch sechs Stützrippen gebildete Flächengestaltung mit offenen Durchbrüchen ist, die Drücke der verschiedenen Betriebszustände aufnehmen zu können, auch in Verbindung mit der eingespritzten vergleichsweise dünnen Membran **91** bezogen auf die aufgespannte Fläche und die aufzunehmenden Drücke.

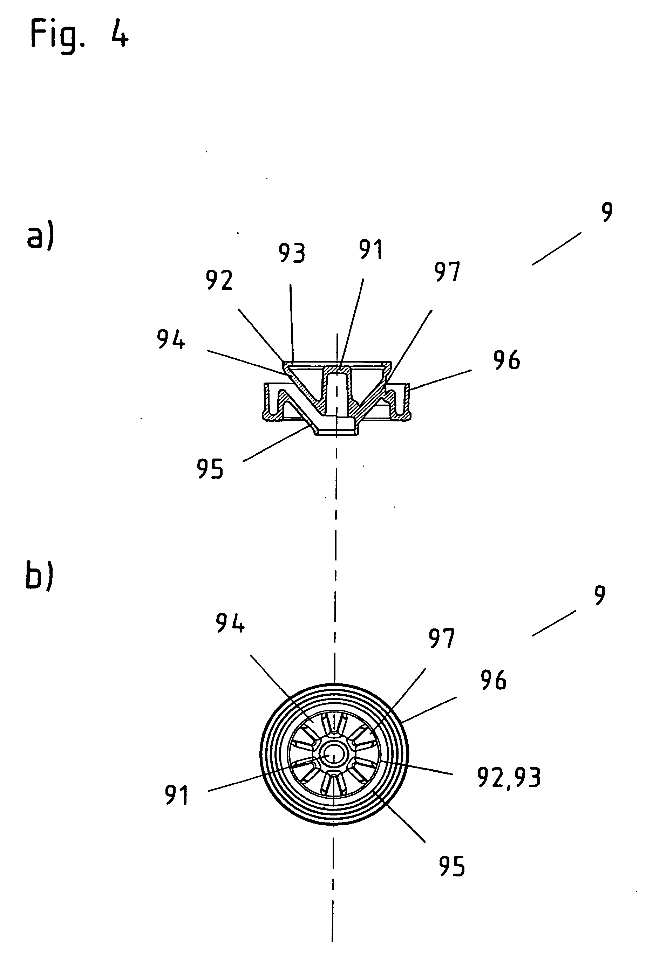

**Fig. 4** zeigt die relativ dünne, gespritzte Elastomer-Membran **9 -** eine Zunahme der Materialstärke steht im reziproken Verhältnis zur Durchgangszahl - aus einem etwa kegelstumpfförmigen, stützrippenumspritzten Materialkörper **91** besteht - mit einer Innenfläche, die auch den Befestigungsdom **40** umfaßt - dessen kreisförmiger Außenrand **93** durch eine Materialwulst **92** abgeschlossen ist und mit dem Deckel 2 einen Ringspalt für den Gaskanal **44** bildet, und eine hohlzylinderförmige Außenfläche **95** aufweist, die durch Umspritzen eines ringförmigen Ansatzes **39** des Oberteils **3** gebildet ist und als Dichtzylinder **96** gegen den zylinderförmigen Ansatz 1 **62** des Unterteils **6** dichtet. Die Elastomer-Membran ist ein im 2K-Verfahren mit dem Oberteil hergestelltes einstückiges Teil und wirkt an den Stellen der Innenfläche, die keine Umspritzung einer Stützrippe darstellen.

Das hohlzylinderförmige Unterteil **6** ist vorzugsweise aus Kunststoff gefertigt und ähnelt einem Doppelnippel mit zwei Außengewinden, wobei ein Außengewinde 1 **63** das Oberteil **3** aufnimmt und das zweite Außengewinde 2 **64** die Verbindung des Be-/Entlüftungsautomaten **1** zur wasserführenden Anlage herstellt. Im Bereich des Außengewindes 2 weist das Unterteil eine rohrförmige Zylinderwand **69** auf, der den Flüssigkeits-/Gaskanal bildet und die Ventileinrichtung **11** mit Ventilkugel **112** und - feder **111** aufnimmt, wobei die Ventilkugel in axialer Richtung vom zylinderförmigen Stößel **41** des Oberteils positioniert wird und gegen den Federdruck den Ventilsitz **70** freigibt oder zusperrt. Den Abschluß zum Oberteil bildet ein topfförmig ausgeprägtes Volumen, wobei dessen kreisförmige Grundfläche **65 , 66** in seinem Zentrum den kugelventilgesteuerten Kanal mit Bohrung 1 71 aufweist und zum Außenrand hin eine radiale Begrenzungsfläche, Ansatz 1 **62 ,** besitzt, die mit dem Dichtzylinder **96** des Membrankörpers **91** im Bereich des Ansatzes **39** des Oberteils zwischen Ober- und Unterteil dichtet.

Die Funktionsweise des Be-/Entlüftungsautomaten kann wie folgt beschrieben werden; es gibt im wesentlichen zwei Betriebszustände und einen Übergangszustand sowie einen Sonderfall. Der Flüssigkeits-/Gaskanal **76** wird gebildet durch die Bohrung 2 **72** des Unterteils **6 ,** die Zylinderwand **69 ,** den Ventilsitz **70 ,** die Bohrung 1 **71 ,** den kegelstumpfförmigen Hohlraum gebildet im wesentlichen aus den Flächen **64 , 65 , 95, 96** und der Membranfläche **97.** Der Gaskanal **44** wird gebildet aus der Membranfläche **97 ,** dem kegelförmigen Hohlraum gebildet im wesentlichen aus den Flächen **94 ,** dem Deckel **2** sowie den Rändern von Deckelkappe **21** und Membrankörper **91.**

Bei lose verschraubtem Ober- **3** und Unterteil **6** wirkt der Stößel **41** des Oberteils nicht axial auf das Kugelventil **11** und die Kugel **112** schließt den Ventilsitz **70** der rohrförmigen Zylinderwand **69** des Unterteils dicht ab, da die Feder **111** auf die Kugel in axialer Richtung wirkt. Gibt es einen Innendruck in der Anlage, der dem Außendruck - meist atmosphärischer Druck - überwiegt, wirkt dieser zusätzlich dichtend auf die Kugeloberfläche. Der kegelstumpfförmige Zwischenraum zwischen Ober- und Unterteil - auch Flüssigkeits-/Gaskanal **76** bezeichnet - bleibt drucklos und/oder auch leer
- Betriebszustand 1.

Wird jetzt das Oberteil **3** gegen das Unterteil **6** allmählich verschraubt, schiebt sich der hohlzylinderförmige Ansatz **39** des Oberteils mit überspritztem Elastomer **96** des Membrankörpers **91** dichtend in den hohlzylinderförmigen Ansatz 1 **62** des Unterteils, bei noch geschlossenem, dichtenden Kugelventil **11**
- Übergangszustand.

Wird das Oberteil **3** gegen das Unterteil **6** weiter handfest bis zum Anschlag **37** verschraubt, wirkt einerseits die Dichtfunktion des Dichtzylinders **96** des Membrankörpers **91** absolut und andererseits der Stößel **41** des Oberteils in axialer Richtung gegen den Federdruck und ggf. gegen den Innendruck öffnend auf das Kugelventil **11 ;** der kegelstumpfförmige Zwischenraum zwischen Ober- und Unterteil - auch als Flüssigkeits-/Gaskanal **76** bezeichnet - füllt sich druckbehaftet
- Betriebszustand 2.

Dies ist der 'normale' Betriebszustand, der Innendruck drückt das Flüssigkeits-/Gasgemisch mit Betriebsdruck gegen den semipermeablen Membrankörper **91 ;** Flüssigkeiten werden zurückgehalten, Gase können durch die Membran **9** über den als Ringspalt ausgebildeten Gaskanal **44** zwischen den Stützrippen **42** des Oberteils 3 und dem kreisförmigen Deckel **2** entweichen. Die relativ dünnwandige semipermeable Membran wird von den mit umspritzten Stützrippen gehalten und beult - je nach Innendruck - im Bereich der sich zwischen den Stützrippen ergebenden Durchbrüche aus.

Einen Sonderfall stellt die Anlage und das wasserführende System unter dem wesentlich höheren Prüfdruck dar
- Betriebszustand 3.

Bei diesem Betriebszustand wird entweder zuvor das Oberteil **3** von dem Unterteil **6** durch Aufschrauben gelöst, so daß das Kugelventil **11** dicht schließt und der Be-/ Entlüftungsautomat **1** diesem Druck standhält oder es bleibt beim Betriebszustand 2 und sowohl die Stützrippen **42** des Oberteils und die sich durchbiegende Membran **9** nehmen den höheren Druck vorübergehend auf; die Prüfungen mit Prüfdruck sind zeitlich begrenzt.

Vorteilhafte Weiterentwicklungen der Erfindung sind Gegenstand der Unteransprüche; die zahlreichen Möglichkeiten und Vorteile der Ausgestaltung der Erfindung spiegeln sich in der Anzahl der Schutzrechtsansprüche wider.

### Bezugszeichenliste

- 1: Be-/Entlüftungsautomat

- 2: Deckel (nicht dargestellt)
- 21: Deckelkappe (nicht dargestellt)

- 3: Oberteil
- 31: Körper
- 32: Berandung
- 33: Seitenrand
- 34: Griffmulde
- 35: Deckelfläche

- 36: Innengewinde
- 37: Anschlag
- 38: Einfassung
- 39: Ansatz
- 40: Dom

- 41: Stößel
- 42: Stützrippe
- 43: Rand
- 44: Gaskanal
- 45: Gasdurchtrittskörper

- 6: Unterteil
- 61: Körper
- 62: Ansatz 1
- 63: Außengewinde 1
- 64: Außengewinde 2
- 65: Ansatz 2

- 66: Kanalboden
- 67: Boden
- 68: Rand 1
- 69: Zylinderwand
- 70: Ventilsitz

- 71: Bohrung 1
- 72: Bohrung 2
- 73: Rand 2
- 74: Innenwand
- 75: Dichtring (nicht dargestellt)

- 76: Flüssigkeits-/Gaskanal

- 9: Membran, semipermeabel
- 91: Membrankörper
- 92: Wulst
- 93: Rand
- 94: Innenfläche
- 95: Außenfläche

- 96: Dichtzylinder
- 97: Membranfläche

- 11: Kugelventil
- 111: Ventilfeder (nicht dargestellt)
- 112: Ventilkugel

## Patentansprüche

1. Be-/Entlüftungsautomat mit einer Elastomer-Membran - insbesondere ein automatisches Be-/Entlüftungsventil für Heizungs- und Warmwasseranlagen oder geschlossene Rohrkreisläufe unter besonderer Berücksichtigung des hydraulischen Abgleichs, bestehend
- aus einem Deckel (2), der durch Schweißen, Pressen und/oder Kleben mit einem hohlzylinderförmigen Oberteil (3) gefügt ist,
- aus einem hohlzylinderförmigen Unterteil (6), der mittels eines Ansatzes (39) des Oberteils (3) umspritzten Membran-Dichtzylinders (96) mit dem Oberteil (3) dicht verschraubt ist,
- aus einem Kugelventil (11), das aus axial beweglichen Feder (111) und Kugel (112) besteht, und das in den Ventilsitz (70) einer Zylinderwand (69) des Unterteils (6) eingefügt ist, und
- aus einer semipermeablen Membran (9) mit einem kegelstumpfförmigen Membrankörper (91) als 2 oder 3 Komponenten-Kunststoffspritzteil eines Dom (40), Stützrippen (42) und Ansatzes (39) des Oberteils (3) umfassenden Gasdurchtrittskörpers (45).

2. Be-/Entlüftungsautomat mit einer Elastomer-Membran nach Anspruch 1, **dadurch gekennzeichnet, dass** der Gasdurchtrittskörper (45) aus einer Anzahl von im Winkel beabstandeten, räumlich diagonal zum Unterteil (6) zentral gerichteten Stützrippen (42) besteht, die in ihrem Zentrum einen axial gerichteten Befestigungsdom (40) aufnehmen, dessen zum Unterteil gerichtetes Ende in einen als Betätigungselement dienenden Stößel (41) für das Kugelventil (11) übergeht.

3. Be-/Entlüftungsautomat mit einer Elastomer-Membran nach mindestens einem der Ansprüche 1 und 2, **dadurch gekennzeichnet, dass** die sich zwischen den Stützrippen (42) ergebenden offenen Durchbrüche des Gasdurchtrittskörpers (45) nach dem Umspritzen desselben die semipermeable, flüssigkeits-/gas- (76) und gaskanaltrennende (44) Membranfläche (97) bilden.

4. Be-/Entlüftungsautomat mit einer Elastomer-Membran nach mindestens einem der Ansprüche 1 bis 3, **dadurch gekennzeichnet, dass** die Anzahl der Stützrippen (42) der durch sie gebildeten Membran-Flächengestaltung mit semipermeablen Durchbrüchen von dem abzuführenden Gasvolumen in der Zeit und den aufzunehmenden Drücken der verschiedenen Betriebszustände abhängt.

5. Be-/Entlüftungsautomat mit einer Elastomer-Membran nach mindestens einem der Ansprüche 1 bis 4, **dadurch gekennzeichnet, dass** der räumliche Winkel des durch die Stützrippen (42) des Gasdurchtrittskörpers (45) gebildeten kegelstumpfförmigen Membrankörpers (91) zu radialer Deckelfläche (35) und axialem Dom (40) sich durch die aufzunehmenden Drücke der verschiedenen Betriebszustände gestaltet.

6. Be-/Entlüftungsautomat mit einer Elastomer-Membran nach mindestens einem der Ansprüche 1 bis 5, **dadurch gekennzeichnet, dass** der Flüssigkeits-/Gaskanal (76) durch eine Bohrung (72) des Unterteils (6), die Zylinderwand (69), den Ventilsitz (70), eine andere Bohrung (71) des Unterteils (6), den kegelstumpfförmigen Hohlraum gebildet aus den Innenflächen des Unterteils (6) und der Membranfläche (97) gebildet ist, und der Gaskanal (44) aus der Membranfläche (97), dem kegelförmigen Hohlraum gebildet aus den Innenflächen (94) der Membran (9), dem Deckel (2) sowie den Rändern von Deckelkappe (21) und Membrankörper (91) gebildet ist.

7. Be-/Entlüftungsautomat mit einer Elastomer-Membran nach mindestens einem der Ansprüche 1 bis 6, **dadurch gekennzeichnet, dass** die gespritzte Elastomer-Membran (9) aus einem kegelstumpfförmigen, stützrippenumspritzten Materialkörper (91) besteht, dessen kreisförmiger Rand (93) durch eine Materialwulst (92) abgeschlossen ist und mit dem Deckel (2) bzw. der Deckelkappe (21) einen Ringspalt für den Gaskanal (44) bildet.

8. Be-/Entlüftungsautomat mit einer Elastomer-Membran nach mindestens einem der Ansprüche 1 bis 7, **dadurch gekennzeichnet, dass** der Be-/Entlüftungsautomat die Betriebszustände Betriebszustand 1, Übergangszustand, Betriebszustand 2 und Betriebszustand 3 einnimmt und beim Übergangszustand von Zustand 1 in Zustand 2, die Dimensionierung von Ansatz (39) des Oberteils (3), Ansatz (62) des Unterteils (6) und Stößel (41) so erfolgt, dass der elastomerumspritzte (96) Ansatz (39) des Oberteils (3) gegen den Ansatz (62) des Unterteils (6) vorlaufend dichtet, bevor der Stößel (41) das Kugelventil (11) öffnet.

9. Be-/Entlüftungsautomat mit einer Elastomer-Membran nach mindestens einem der Ansprüche 1 bis 8, **dadurch gekennzeichnet, dass** im Betriebszustand 2 die Dimensionierung zwischen einem Anschlag (37) des Oberteils (3) und dem Ansatz (62) des Unterteils (6) so gewählt ist, dass der Flüssigkeits-/Gaskanal (76) durch die Öffnung der Ventilkugel (112) des Kugelventils (11) zum Ventilsitz (70) volumenmaximiert ist.

10. Be-/Entlüftungsautomat mit einer Elastomer-Membran nach mindestens einem der Ansprüche 1 bis 9, **dadurch gekennzeichnet, dass** der Gasdurchtrittskörper (45) so gestaltet ist, dass der Deckel (2) bzw. die Deckelkappe (21) nicht betriebsdruckbehaftet ist.

## Claims

1. An automatic aeration/venting device with an elastomer membrane - in particular an automatic aeration/venting valve for heating and hot-water systems or closed pipe circuits with particular regard to the hydraulic balance, comprising
- a cover (2) which is connected to a hollow-cylindrical upper part (3) by welding, pressing and/or gluing,
- a hollow-cylindrical lower part (6) which is screwed tightly to the upper part (3) via a shoulder (39) of the upper part (3) around which a membrane-sealing cylinder (96) has been injection-moulded,
- a ball valve (11) which comprises an axially mobile spring (111) and ball (112), and which is fitted into the valve seat (70) of a cylinder wall (69) of the lower part (6), and
- a semipermeable membrane (9) with a truncated cone-shaped membrane body (91) as a 2- or 3-component injected-moulded plastic part of a gas passage body (45) comprising a dome (40), support ribs (42) and the shoulder (39) of the upper part (3).

2. The automatic aeration/venting device with an elastomer membrane according to claim 1, **characterised in that** the gas passage body (45) comprises a number of support ribs (42) spaced apart at an angle and directed centrally and spatially diagonally towards the lower part (6), said support ribs accommodating in their centre an axially directed fixing dome (40), whose end directed towards the lower part transforms into a tappet (41) for the ball valve (11), said tappet serving as an actuation element.

3. The automatic aeration/venting device with an elastomer membrane according to at least one of claims 1 and 2, **characterised in that** the open perforations of the gas passage body (45) arising between the support ribs (42) form, after the injection moulding of said gas passage body, the semipermeable, liquid-/gas- (76) and gas channel-separating (44) membrane face (97).

4. The automatic aeration/venting device with an elastomer membrane according to at least one of claims 1 to 3, **characterised in that** the number of the support ribs (42) of the membrane face configuration formed by the latter with semipermeable perforations depends on the gas volume to be carried away over time and the pressures of the various operating states that have to be withstood.

5. The automatic aeration/venting device with an elastomer membrane according to at least one of claims 1 to 4, **characterised in that** the spatial angle of the truncated cone-shaped membrane body (91) formed by the support ribs (42) of the gas passage body (45) with respect to the radial cover face (35) and the axial dome (40) is determined by the pressures of the various operating states that have to be withstood.

6. The automatic aeration/venting device with an elastomer membrane according to at least one of claims 1 to 5, **characterised in that** the liquid/gas channel (76) is formed by a bore (72) of the lower part (6), the cylinder wall (69), the valve seat (70), another bore (71) of the lower part (6), the truncated cone-shaped hollow space formed by the inner faces of the lower part (6) and the membrane faces (97), and the gas channel (44) is formed by the membrane face (97), the truncated cone-shaped hollow space formed by the inner faces (94) of the membrane (9), the cover (2) as well as the edges of the cover cap (21) and the membrane body (91).

7. The automatic aeration/venting device with an elastomer membrane according to at least one of claims 1 to 6, **characterised in that** the injection-moulded elastomer membrane (9) comprises a truncated cone-shaped material body (91) with injection-moulded support ribs, the circular edge (93) of said material body being terminated by a material bead (92) and forming, with the cover (2) or the cover cap (21), an annular gap for the gas channel (44).

8. The automatic aeration/venting device with an elastomer membrane according to at least one of claims 1 to 7, **characterised in that** the automatic aeration/venting device assumes the operating states operating state 1, transition state, operating state 2 and operating state 3 and, during the transition state from state 1 to state 2, the dimensioning of the shoulder (39) of the upper part (3), the shoulder (62) of the lower part (6) and the tappet (41) takes place in such a way that the elastomer injection-moulded (96) shoulder (39) of the upper part (3) forms a temporary seal against the shoulder (62) of the lower part (6) before the tappet (41) opens the ball valve (11).

9. The automatic aeration/venting device with an elastomer membrane according to at least one of claims 1 to 8, **characterised in that**, in operating state 2, the dimensioning between a stop (37) of the upper part (3) and the shoulder (62) of the lower part (6) is selected such that the liquid/gas channel (76) is volume-maximised by the opening of the valve ball (112) of the ball valve (11) to the valve seat (70).

10. The automatic aeration/venting device with an elastomer membrane according to at least one of claims 1 to 9, **characterised in that** the gas passage body (45) is constituted in such a way that the cover (2) or the cover cap (21) is not exposed to the operational pressure.

## Revendications

1. Automate d'amenée/d'extraction d'air comprenant une membrane élastomère - en particulier clapet d'amenée/d'extraction d'air automatique pour les installations de chauffage et d'eau chaude ou les circuits de tuyauterie fermés tenant particulièrement compte de l'équilibrage hydraulique, composé
- d'un couvercle (2), qui est joint par soudage, pressage et/ou collage à une partie supérieure (3) en forme de cylindre creux,
- d'une partie inférieure (6) en forme de cylindre creux qui est vissée étroitement à la partie supérieure (3) via un cylindre (96) d'étanchéité de la membrane enveloppant un épaulement (39) de la partie supérieure (3),
- d'une soupape à bille (11), composée de ressorts (111) et de billes (112) mobiles axialement et qui est insérée dans le siège de soupape (70) d'une paroi cylindrique (69) de la partie inférieure (6), et
- d'une membrane (9) semi-perméable comprenant un corps de membrane (91) tronconique en tant que pièce injectée en plastique à 2 ou 3 composants d'un corps de passage de gaz (45) comprenant le dôme (40), des nervures-supports (42) et l'épaulement (39) de la partie supérieure (3).

2. Automate d'amenée/d'extraction d'air comprenant une membrane élastomère selon la revendication 1, **caractérisé en ce que** le corps de passage de gaz (45) est composé d'un nombre de nervures-supports (42) à distance angulaire dirigées centralement par rapport à la partie inférieure (6) et de manière diagonale dans l'espace, qui reçoivent en leur centre un dôme de fixation (40) dirigé axialement dont l'extrémité dirigée vers la partie inférieure passe dans un poussoir (41) pour la soupape à bille (11) servant d'élément d'actionnement.

3. Automate d'amenée/d'extraction d'air comprenant une membrane élastomère selon au moins la revendication 1 et 2, **caractérisé en ce que** les percées ouvertes du corps de passage de gaz (45) se formant entre les nervures-supports (42) après l'enveloppement de celui-ci, forment la surface de membrane (97) semi-perméable, séparant le canal de liquides/gaz (76) et le canal de gaz (44).

4. Automate d'amenée/d'extraction d'air comprenant une membrane élastomère selon au moins l'une des revendications 1 à 3, **caractérisé en ce que** le nombre de nervures-supports (42) conformation formée par elles de la surface de membrane avec des percées semi-perméables, dépend du volume de gaz à évacuer dans le temps et de la pression à recevoir des différents états de fonctionnement.

5. Automate d'amenée/d'extraction d'air comprenant une membrane élastomère selon au moins l'une des revendications 1 à 4, **caractérisé en ce que** l'angle spatial du corps de membrane (91) tronconique formé par les nervures-supports (42) du corps de passage de gaz (45) par rapport à la surface de couvercle radiale (35) et au dôme axial (40) se forme par les pressions à recevoir des différents états de fonctionnement.

6. Automate d'amenée/d'extraction d'air comprenant une membrane élastomère selon au moins l'une des revendications 1 à 5, **caractérisé en ce que** le canal de liquide/gaz (76) est formé par un perçage (72) de la partie inférieure (6), par la paroi cylindrique (69), par le siège de soupape (70), par un autre perçage (71) de la partie inférieure (6), par l'espace creux tronconique formé par les surfaces intérieures de la partie inférieure (6) et de la surface de membrane (97), et le canal de gaz (44) est formé par la surface de membrane (97), par l'espace creux conique formé par les surfaces intérieures (94) de la membrane (9), par le couvercle (2) ainsi que par les bords du bouchon de couvercle (21) et du corps de membrane (91).

7. Automate d'amenée/d'extraction d'air comprenant une membrane élastomère selon au moins l'une des revendications 1 à 6, **caractérisé en ce que** la membrane élastomère (9) enveloppée est composée d'un corps de matériau (91) tronconique, enveloppant les nervures-support dont le bord (93) circulaire est fermé par un bourrelet de matériau (92) et forme avec le couvercle (2), respectivement ,le bouchon de couvercle (21), une fente annulaire pour le canal de gaz (44).

8. Automate d'amenée/d'extraction d'air comprenant une membrane élastomère selon au moins l'une des revendications 1 à 7, **caractérisé en ce que** l'automate d'amenée/d'extraction d'air adopte les modes de fonctionnement Mode de fonctionnement 1, le mode de transition Mode de fonctionnement 2 et le Mode de fonctionnement 3 et lors du mode de transition du Mode 1 au Mode 2, le dimensionnement de l'épaulement (39) de la partie supérieure (3), de l'épaulement (62) de la partie inférieure (6) et du poussoir (41) s'effectue de telle sorte que l'épaulement (39) de la partie supérieure (3) enveloppé d'élastomère (96) crée une étanchéité provisoire contre l'épaulement (62) de la partie inférieure (6) avant que le poussoir (41) n'ouvre la soupape à bille (11).

9. Automate d'amenée/d'extraction d'air comprenant une membrane élastomère selon au moins l'une des revendications 1 à 8, **caractérisé en ce que** dans le Mode de fonctionnement 2, le dimensionnement entre une butée (37) de la partie supérieure (3) et l'épaulement (62) de la partie inférieure (6) est ainsi choisi que le canal de liquide/gaz (76) à travers l'ouverture de la bille de soupape (112) de la soupape à bille (11) en direction du siège de soupape (70) est maximisé en volume.

10. Automate d'amenée/d'extraction d'air comprenant une membrane élastomère selon au moins l'une des revendications 1 à 9, **caractérisé en ce que** le corps de passage de gaz (45) est ainsi formé que le couvercle (2), respectivement, le bouchon de couvercle (21) n'est pas sous la pression de fonctionnement.
